# EUROPÄISCHE PATENTANMELDUNG

(11) **EP 1 701 076 A2**
(43) Veröffentlichungstag der Anmeldung: **13.09.2006**
(21) Anmeldenummer: 06004491.4
(22) Anmeldetag: 06.03.2006
(51) Int. Cl.: F16L 3/10

(54) **Halterungssystem zur Führung und Befestigung eines oder mehrerer Rohre oder ähnlich geformter Körper**

(30) Priorität: 10.03.2005 DE 102005011131; 10.03.2005 US 660213 P
(71) Anmelder: Airbus Deutschland GmbH, 21129 Hamburg (DE)
(72) Erfinder: Thiedig, Jens, 28816 Stuhr (DE); Mail, Günter, 28816 Stuhr (DE)
(74) Vertreter: Maiwald Patentanwalts GmbH

(57) **Zusammenfassung**

Halterung zur Führung und Befestigung von mindestens einem Element (6), wobei die Halterung ein erstes Halterbauteil (1a), ein zweites Halterbauteil (1b) und eine Dämpfungseinrichtung (1.2) aufweist, wobei in dem ersten Halterbauteil (1a) und in dem zweiten Halterbauteil (1b) Aussparungen vorgesehen sind, durch die in einem zusammengesetzten Zustand von erstem Halterbauteil (1a) und zweitem Halterbauteil (1b) das mindestens eine Element (6) aufnehmbar ist, und wobei die Dämpfungseinrichtung (1.2) in den Aussparungen derart vorgesehen ist, dass in einem zusammengesetzten Zustand von erstem Halterbauteil (1a) und zweitem Halterbauteil (1b) das mindestens eine Element (6) im Wesentlichen vollumfänglich von der Dämpfungseinrichtung (1.2) umgeben ist.

## Beschreibung

Es ist bekannt, Kabel oder Rohre in einer Halterung zu führen und zu befestigen.

FR 2029254 offenbart eine Führung für Kabelbündel, die unterirdisch als Telefonleitungen verlegt werden sollen.

Das deutsche Gebrauchsmuster mit der Rollennummer G 82 31 264.8 offenbart einen Rohrhalter für die Befestigung mehrerer Rohrleitungen mit Befestigungsbolzen und einem daran angeordneten und zwischen Muttern befestigten Halteteil.

DE 197 52 525 C1 offenbart einen Rohrhalter mit Schwingungsdämpfung, bei dem ein Grundkörper mit einer Bodenplatte und U-förmig angeformten Seitenwänden sowie eine einen Rohrleitungsumfang um mehr als die Hälfte umgreifende Halteschale vorgesehen sind. Um nach dem Eindrücken der Rohrleitungen diese zu fixieren, ist am oberen Ende einer der Seitenwände ein Verschlussbügel schwenkbar geformt, welcher umgeklappt werden kann und mit einer Gegenrastkante zusammenwirkt.

Bedingt durch Fertigungstoleranzen kann es bei der Montage herkömmlich verwendeter Halter zur Klemmung und zum Spiel zwischen den Haltern und den Rohren kommen. Ein solcher Zustand kann sich ungünstig auf die Halter und die Rohre bei Erschütterungen auswirken.

Ferner sind bekannte Rohrhalter häufig aufwendig und kompliziert zu montieren.

Es ist eine Aufgabe der Erfindung, das Führen und Befestigen von Elementen kostengünstig und geschützt vor Erschütterungen zu ermöglichen.

Diese Aufgabe wird durch eine Halterung, durch ein Verfahren zur Führung und Befestigung von mindestens einem Element, durch ein Flugzeug und durch die Verwendung einer Halterung in einem Flugzeug mit den Merkmalen gemäß den unabhängigen Patentansprüchen gelöst.

Gemäß einem exemplarischen Ausführungsbeispiel der Erfindung ist eine Halterung zur Führung und Befestigung von mindestens einem Element bereitgestellt, die ein erstes Halterbauteil, ein zweites Halterbauteil und eine Dämpfungseinrichtung aufweist. In dem ersten Halterbauteil und in dem zweiten Halterbauteil können Aussparungen vorgesehen sein, durch die in einem zusammengesetzten Zustand von erstem Halterbauteil und zweitem Halterbauteil das mindestens eine Element aufnehmbar ist. Die Dämpfungseinrichtung kann in den Aussparungen derart vorgesehen sein, dass in einem zusammengesetzten Zustand von erstem Halterbauteil und zweitem Halterbauteil das mindestens eine Element im Wesentlichen vollumfänglich von der Dämpfungseinrichtung umgeben ist.

Gemäß einem anderen exemplarischen Ausführungsbeispiel der Erfindung ist ein Verfahren zur Führung und Befestigung von mindestens einem Element geschaffen, wobei das mindestens eine Element von Aussparungen in einem ersten Halterbauteil und in einem zweiten Halterbauteil aufgenommen wird. Das erste Halterbauteil kann mit dem zweiten Halterbauteil zusammengesetzt werden. Eine Dämpfungseinrichtung kann in den Aussparungen derart vorgesehen werden, dass nach dem Zusammensetzen von erstem Halterbauteil und zweitem Halterbauteil das mindestens eine Element im Wesentlichen vollumfänglich von der Dämpfungseinrichtung umgeben ist.

Gemäß einem anderen exemplarischen Ausführungsbeispiel der Erfindung ist ein Flugzeug mit einer Halterung mit den oben beschriebenen Merkmalen geschaffen.

Gemäß noch einem anderen Ausführungsbeispiel der Erfindung wird die Verwendung einer Halterung mit den oben beschriebenen Merkmalen in einem Flugzeug gelehrt.

Ein Aspekt der Erfindung kann darin gesehen werden, dass in Aussparungen zum Aufnehmen eines zu führenden und befestigenden Elements eine Dämpfungseinrichtung integriert vorgesehen werden kann, die in einem zusammengesetzten Zustand der beiden Halterbauteile das Element entlang seines gesamten Umfangs umgibt. Dadurch ist eine kostengünstige, zum Beispiel in Spritzgusstechnologie fertigbare, Halterung geschaffen, bei der ein geführtes und befestigtes Element (zum Beispiel ein Rohr) mittels der Dämpfungseinrichtung sicher vor Erschütterungen und folglich Klappern geschützt ist und sowohl in radialer als auch in axialer Richtung (in axialer Richtung insbesondere durch spezielle Maßnahmen an dem zu halternden Element) vor einer unerwünschten Positionsänderung bewahrt werden kann.

Anders ausgedrückt ist erfindungsgemäß ein Halterungssystem zur Führung und Befestigung eines oder mehrerer Rohre oder ähnlich geformter Körper geschaffen. Dieses Rohrbefestigungssystem ist insbesondere für Hydraulikrohre geeignet und kann zum Beispiel in einem Flugzeug (zum Beispiel in einem Flugzeug der Airbusflotte) implementiert oder nachgerüstet werden. Das erfindungsgemäße Befestigungssystem kann Rohre führen, Rohrschwingungen abdämpfen und bestimmte Durchzugskräfte für die Rohre gewährleisten. Die Halterung ist leicht, besteht aus wenigen Einzelteilen, ist vormontierbar und kostengünstig in der Herstellung, Anwendung und Montage. Die Dämpfungszonen können in dem Rohrhalter fest integriert und aus demselben Material wie der Rohrhalter gefertigt sein. Somit gewährleistet die Halterung der Erfindung eine sichere und definierte Aufnahme und Führung von Rohrleitungen oder auch anderen Elementen wie zum Beispiel Kabeln.

Aufgrund ihres leichten Gewichts und ihrer guten Vormontierbarkeit sowie der kostengünstigen Fertigbarkeit ist die Halterung der Erfindung gut zur Verwendung in einem Flugzeug geeignet.

Gemäß einem Aspekt der Erfindung ist ein Halterungssystem zur Führung und Befestigung eines oder mehrerer Rohre oder ähnlich geformter Körper mit und ohne Fixierung zu einem Anschlussbauteil geschaffen. Die Aufnahme eines Rohres kann über Halbschalen erfolgen, die sich jeweils in einer Halterhälfte befinden können und das Rohr durch Zusammenführen der beiden Halterhälften umschließen können. Derartige Halter können als Befestigungssystem für Hydraulikrohrleitungen in Airbusflugzeugen eingesetzt werden.

Bei einem Halter gemäß einem Ausführungsbeispiel der Erfindung kann durch eine speziell ausgeführte Führung für die Rohre ein Spiel bzw. eine zu starke Klemmung vermieden oder reduziert werden. Zudem kann das Rohr bei Bewegungen und Schwingungen durch diese Führung abgedämpft werden.

Mit einem speziellen Verbindungselementsystem zur Verschraubung der Halterhälften kann eine Vormontierbarkeit erreicht werden. Ferner kann mit einem einzigen Werkzeug zum Anziehen der Verbindungselemente die Montage der Halterung durchgeführt werden. In Verbindung mit einem Langloch in einem Anschlussbauteil kann eine beidseitige Montage und eine Verschiebung quer zur Längsrichtung des Rohres ermöglicht werden.

Durch einen Schnellverschluss oder einen zusätzlichen Bolzen zwischen den Führungen für die Rohre kann ein Aufklaffen der Halter verhindert und somit eine gleichmäßige Klemmung und Dämpfung der Rohre erreicht werden.

Weitere exemplarische Ausgestaltungen der Erfindung ergeben sich aus den abhängigen Ansprüchen.

Im Weiteren werden Ausgestaltungen der erfindungsgemäßen Halterung beschrieben. Diese Ausgestaltungen gelten auch für das Verfahren, die Aufnahme im Flugzeug und die Verwendung.

Die Halterung kann zur Führung und Befestigung von mindestens einem Rohr eingerichtet sein. Ein solches Rohr kann zum Beispiel ein Hydraulikrohr sein, insbesondere in einem Fahrzeug oder in einem Flugzeug.

Die Dämpfungseinrichtung kann integriert, vorzugsweise einstoffig, an dem ersten Halterbauteil bzw. an dem zweiten Halterbauteil vorgesehen sein. Anders ausgedrückt kann die Dämpfungsvorrichtung einstückig (d.h. als ein gemeinsames Bauelement) und ggf. auch einstoffig (d.h. aus demselben Material) mit den jeweiligen Halterbauteilen vorgesehen sein, was eine kostengünstige Fertigung ermöglicht.

Die Dämpfungseinrichtung kann eingerichtet sein, eine im Wesentlichen spielfreie Aufnahme des mindestens einen Elements und/oder eine Dämpfung in radialer Richtung der Aussparungen und/oder eine vorgebbare Durchzugskraft für das mindestens eine Element in axialer Richtung zu realisieren. Dadurch ist ein sicherer Schutz vor Erschütterungsauswirkungen ermöglicht.

Die Dämpfungseinrichtung kann aus einem Schaumstoff, einem Gummi und/oder aus einer Federungseinrichtung bestehen.

Die Dämpfungseinrichtung kann auf das zu führende und zu befestigende Element in vollumfänglicher Richtung derart eine mechanische (rücktreibende) Kraft ausüben, dass ein sicherer Schutz vor Erschütterungen in radialer Richtung bei gleichzeitiger Verschiebung (definierte Verschiebungskraft) in axialer Richtung ermöglicht ist. Unter Verwendung des Federprinzips kann die Dämpfungseinrichtung als polygonähnliches Bauteil (zum Beispiel als regelmäßiges Sechseck) bzw. keilartig realisiert sein, das an jedem Angrenzbereich zu einem zu befestigenden Element bei Auslenkung eine rücktreibende Federkraft auf das Element ausübt, womit eine unerwünschte ungeführte Bewegung des Elements vermieden bzw. abgedämpft wird. Dadurch ist ein Klappern des Elements in der erfindungsgemäßen Führung vermieden. Bei einer Realisierung der Dämpfungszone als polygonähnliches Bauteil sind auch Toleranzen von aufzunehmenden Elementen ausgleichbar, so dass maßlich flexible Elemente (z.B. Rohre) mit üblichen Durchmessertoleranzen und unterschiedlichen Oberflächeneigenschaften (maßlich, Oberflächenschutz, Toleranzen) einsetzbar sind. Eine polygonartige Dämpfungseinrichtung kann aus zwei Halbpolygonen zusammengesetzt sein, die in den Aussparungen der Halterbauteile eingelegt oder integriert sein können.

Die Halterelemente können als zwei identische Halterhälften realisiert sein, mittels welchen das mindestens eine Element vollumfänglich verschließbar ist. Zum Beispiel können die Halterbauteile quaderförmige Vollkörper sein, die halbzylinderförmige Aussparungen zur Aufnahme von zylinderförmigen Rohren oder Kabeln und Durchgangsbohrungen zum Verschrauben der beiden Halterhälften miteinander aufweisen. Wenn die beiden Halterbauteile eine identische Struktur aufweisen, ist eine kostengünstige Fertigung ermöglicht und eine Vertauschbarkeit der Halterbauteile bei der Montage ausgeschlossen.

In dem ersten Halterbauteil und in dem zweiten Halterbauteil kann jeweils eine Mehrzahl von Aussparungen vorgesehen sein, mit denen eine Mehrzahl von Elementen aufnehmbar sind. Es können somit eine Mehrzahl von Rohren, zum Beispiel in zueinander paralleler Richtung, geführt werden. Auch ist ein Führen von Kabeln oder anderen Elementen möglich.

Das erste Halterbauteil kann mit dem zweiten Halterbauteil verschraubbar sein. Dies stellt eine kostengünstige Möglichkeit dar, die beiden Halterbauteile zu verbinden und erleichtert die Montage.

Ferner kann ein Anschlussbauteil optional vorgesehen sein, wobei das erste Halterbauteil mit dem zweiten Halterbauteil und mit dem Anschlussbauteil verschraubbar ist. Dieses Anschlussbauteil dient als Schnittstelle zwischen den Halterbauteilen und einem Grundkörper für die Halterungsmontage.

Die Halterung kann eine Ankermutter und eine Schraube aufweisen, die durch Bohrungen in dem ersten Halterbauteil und in dem zweiten Halterbauteil hindurchgeführt werden können und zum Befestigen des ersten Halterbauteils mit dem zweiten Halterbauteil verschraubbar sind. Die Ankermutter kann auf die Bohrungen derart angepasst sein, dass ein selbsttätiges Lösen des ersten Halterbauteils von dem zweiten Halterbauteil vermieden ist. Durch spezielle Maßnahmen (zum Beispiel ein Clip-Verschluss) kann zudem ein selbsttätiges Lösen der beiden Halterhälften im Falle der Montage der beiden Halterhälften und der Ankermutter ohne Schrauben verhindert werden.

Die erfindungsgemäße Ankermutter kann derart gestaltet sein, dass die zum Beispiel durch ein Langloch steckbar und nachfolgend als Schutz vor einem Herausfallen aus dem Langloch eines Anschlussbauteils um 90° gedreht werden kann. Zum Beispiel kann die Ankermutter hierfür einen asymmetrischen (zum Beispiel einen ovalen oder einen rechteckigen und nicht quadratischen) Querschnitt aufweisen. Dies ermöglicht eine Überkopfmontage der Halterung, ohne dass die Ankermutter aus dem Langloch herausfällt. Die Ankermutter kann auch für andere Zwecke verwendet werden als zum Befestigen der erfindungsgemäßen Halterung. Die Ankermutter ermöglicht eine einfache und schnelle Montage mit einem einzigen Werkzeug (in Verbindung mit einem auf die Ankermutter abgestimmten Bauteil, das verschraubt werden soll).

In dem Anschlussteil kann ein Langloch vorgesehen sein, dessen Form auf die Form der Ankermutter derart angepasst bzw. abgestimmt sein kann, dass eine beidseitige Montierbarkeit auf dem Anschlussbauteil ermöglicht ist. Ferner kann eine Verschiebbarkeit bzw. Anpassbarkeit der beiden Halterbauteile zum Beispiel quer zu einer Erstreckungsrichtung des mindestens einen Leitung-Elements ermöglicht werden, indem die Halterbauteile an einer entsprechenden Stelle des Langlochs befestigt werden.

Die Halterung kann einen Schnellverschluss (oder einen zusätzlichen Bolzen) zum Verbinden des ersten Halterbauteils mit dem zweiten Halterbauteil aufweisen, so dass ein Aufklaffen des ersten Halterbauteils und des zweiten Halterbauteils vermieden ist. Unter einem Schnellverschluss wird ein Verschluss verstanden, mit dem die beiden Halterbauteile schnell und einfach bzw. "provisorisch" miteinander verbunden werden können, zum Beispiel während der Montage. Ein dauerhaftes Fixieren der beiden Halterbauteile kann dann mit einer anderen Verschlussvorrichtung erfolgen. Der Schnellverschluss kann zum Beispiel ein Klickverschluss sein. Der Schnellverschluss kann mit dem ersten Halterbauteil und mit dem zweiten Halterbauteil integriert sein oder kann von dem ersten Halterbauteil und dem zweiten Halterbauteil als separates Bauelement vorgesehen sein. (wie z.B. einen zusätzlichen Bolzen, oder eine Schraube und Ankermutter)

Mit dem erfindungsgemäßen Halter und den Verbindungselementen lassen sich insbesondere folgende Installationen ausführen:
- auf einem Anschlussbauteil eindeutig positionierbar und fixierbar
- auf einem Anschlussbauteil mit lateraler Verschiebbarkeit und Fixierbarkeit
- auf dem zu halternden Element fixierbar ohne Anschlussbauteil.

Ausführungsbeispiele der Erfindung sind in den Figuren dargestellt und werden im Weiteren näher erläutert.

Es zeigen:
Figur 1 eine Explosionsdarstellung einer Halterung für Rohre gemäß einem exemplarischen Ausführungsbeispiel der Erfindung.
Figur 2 eine Darstellung der in Figur 1 gezeigten Halterung für Rohre in einem zusammengesetzten Zustand gemäß dem exemplarischen Ausführungsbeispiel der Erfindung.

Gleiche oder ähnliche Komponenten in unterschiedlichen Figuren sind mit gleichen Bezugsziffern versehen. Die Darstellungen in den Figuren sind schematisch und nicht maßstäblich.

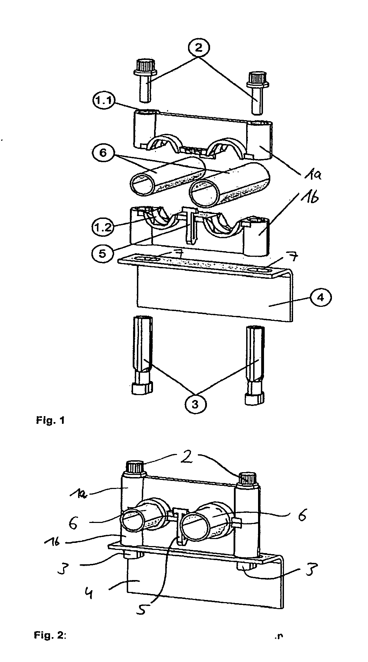

Fig. 1 und Fig. 2 zeigen ein Ausführungsbeispiel eines Halterungssystems zur Führung und zur Befestigung von Rohren oder ähnlich geformten Körpern gemäß einem exemplarischen Ausführungsbeispiel der Erfindung.

Fig. 1 zeigt eine Halterung zur Führung und Befestigung von zwei Rohren 6, wobei die Halterung ein erstes Halterbauteil 1a, ein zweites Halterbauteil 1b und eine Dämpfungseinrichtung 1.2 aufweist. In dem ersten Halterbauteil 1 a und in dem zweiten Halterbauteil 1b sind Aussparungen vorgesehen, durch die in einem zusammengesetzten Zustand von erstem Halterbauteil la und zweitem Halterbauteil 1b die beiden Rohre 6 aufnehmbar ist. Die Dämpfungseinrichtung 1.2 ist in den Aussparungen derart vorgesehen, dass in einem zusammengesetzten Zustand von erstem Halterbauteil 1a und zweitem Halterbauteil 1b die beiden Rohre 6 im Wesentlichen vollumfänglich von der Dämpfungseinrichtung 1.2 umgeben sind.

Die Anzahl der an der Halterung zu befestigenden Rohre 6 kann durch entsprechende Anpassung der Halterung eingestellt werden. Mittels Zusammenführens zweier gleicher Halterhälften 1a, 1b können die zu befestigenden Rohre 6 von den Führungen 1.2 umschlossen werden. Die Verbindung der zwei Halterhälften 1a und 1b untereinander mit oder ohne ein Anschlussbauteil 4 kann über Schrauben 2 und Ankermuttern 3 erfolgen, die durch Bohrungen 1.1 in dem Halter und durch Langlöcher 7 in dem Anschlussbauteil 4 montiert werden können. Die Ankermuttern 3 und die Bohrungen 1.1 sind so ausgeführt, dass eine Montage von beiden Seiten des Anschlussbauteils 4 ermöglicht ist und nur ein einziges Werkzeug zum Anziehen der Verbindungselemente 2, 3 nötig ist. Die Ankermuttern 3 und die Bohrungen 1.1 und ein Clip 5 verfügen über eine Einrichtung , die ein selbsttätiges Lösen der beiden Halterhälften verhindert, wenn die Ankermuttern 3 durch die Bohrungen 1.1 der beiden Halterhälften 1a, 1b ohne Schrauben 2 montiert sind.

Die Führungen 1.2 sind mit Dämpfungszonen ausgestattet. Bei radialer Bewegung der Rohre 6 relativ zu den zwei Halterhälften 1a, 1 b verformen sich diese Zonen und gewährleisten in jedem Einfederungszustand eine spielfreie Aufnahme der Rohre 6. Die Dämpfungszonen sind so ausgeführt, dass bei zunehmender Verformung die Verformungskraft bzw. Dämpfungskraft zunimmt und sich die Auflageflächen für die Rohre 6 vergrößern. Zudem wird eine bestimmte Durchzugskraft für die Rohre 6 in axialer Richtung erreicht.

Bei einer Haltelösung für die Aufnahme mehrerer Rohre 6 befindet sich zur Vermeidung des Aufklaffens der beiden Halterhälften 1a, 1b zwischen den Führungen 1.2 je ein Schnellverschluss 5 oder ein zusätzlicher Bolzen. Dieser kann fest am Halter integriert oder als separates Bauteil (zum Beispiel Schraube und Ankermutter)ausgeführt sein.

Somit ist erfindungsgemäß eine Halterung zur Führung und Befestigung von Rohren 6 oder ähnlich geformter Körper geschaffen. Der Halter kann über fest integrierte Dämpfungszonen an den Führungen 1.2 des Halters für diese Rohre 6 verfügen, die in jedem Einfederungszustand eine spielfreie Aufnahme der Rohre 6, eine Dämpfung in radialer und eine bestimmte Durchzugskraft für die Rohre 6 in axialer Richtung gewährleisten können. Zwei gleiche Halterhälften 1a, 1b können die Rohre 6 vollständig umschließen. Mit dem erfindungsgemäßen Halter können durch Variation der Anzahl von Führungen 1.2 ein oder mehrere Rohre 6 befestigt werden. Die Halterhälften 1a, 1b können zueinander mit oder ohne ein Anschlussbauteil 4 durch Verbindungselemente 2, 3 verschraubt werden. Der Halter kann eine Abstandshaltung zwischen den Rohren 6 und deren Position gewährleisten.

Ferner kann eine Ankermutter 3 mit Schraube 2 zur Verbindung der Halterhälften 1a, 1b eingesetzt werden. Hierbei kommt man zum Anziehen der Schraube 2 in Verbindung mit der durch die Bohrung 1.1 des Halters 1a und 1b verlaufenden Ankermutter 3 mit nur einem Werkzeug aus. Durch spezielle Maßnahmen zwischen der Ankermutter 3 und der Bohrung 1.1 wird ein selbsttätiges Lösen der beiden Halterhälften 1a, 1b im Falle der Montage der beiden Halterhälften 1a, 1b und der Ankermuttern 3 ohne Schrauben 2 verhindert (zum Beispiel durch den Clip 5 oder alternativ durch eine statt des Clips 5 angebrachte dritte zentralen Ankermutter - nicht gezeigt).

Die Form des Kopfes der Ankermutter 3 in Verbindung mit einem Langloch 7 in dem Anschlussteil 4 kann gewährleisten, dass eine beidseitige Montierbarkeit auf dem Anschlussbauteil 4 möglich ist. Zudem kann eine Montage ohne Anschlussbauteil 4 erfolgen.

Mit der Lage der Langlöcher 7 in dem Anschlussbauteil 4 kann eine in Richtung der Langlöcher 7 verschiebbare oder eine feste Halterlösung flexibel gewählt werden.

Durch den Schnellverschluss 5 zum Verbinden der Halterhälften 1a, 1b zwischen den Führungen kann ein Aufklaffen der beiden Halterhälften 1a und 1b vermieden werden. Dieser Schnellverschluss 5 kann entweder fest in den Haltern integriert oder als zusätzliches Bauelement ausgeführt sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Halterung zur Führung und Befestigung von mindestens einem Element (6), wobei die Halterung aufweist
ein erstes Halterbauteil (1a);
ein zweites Halterbauteil (1b);
eine Dämpfungseinrichtung (1.2);
wobei in dem ersten Halterbauteil (1a) und in dem zweiten Halterbauteil (1b) Aussparungen vorgesehen sind, durch die in einem zusammengesetzten Zustand von erstem Halterbauteil (1a) und zweitem Halterbauteil (1b) das mindestens eine Element (6) aufnehmbar ist;
wobei die Dämpfungseinrichtung (1.2) in den Aussparungen derart vorgesehen ist, dass in einem zusammengesetzten Zustand von erstem Halterbauteil (1a) und zweitem Halterbauteil (1b) das mindestens eine Element (6) im Wesentlichen vollumfänglich von der Dämpfungseinrichtung (1.2) umgeben ist, und wobei die Dämpfungseinrichtung (1.2) integriert mit dem ersten Halterbauteil (1a) und dem zweiten Halterbauteil (1b) vorgesehen ist.

2. Halterung nach Anspruch 1,
eingerichtet zur Führung und Befestigung von mindestens einem Rohr (6).

3. Halterung nach Anspruch 1 oder 2,
bei der die Dämpfungseinrichtung (1.2) einstoffig mit dem ersten Halterbauteil (1a) und dem zweiten Halterbauteil (1b) vorgesehen ist.

4. Halterung nach einem der Ansprüche 1 bis 3,
bei der die Dämpfungseinrichtung (1.2) derart eingerichtet ist, dass eine spielfreie Aufnahme des mindestens einen Elements (6) und/oder eine Dämpfung in radialer Richtung der Aussparungen und/oder eine vorgebbare Durchzugskraft für das mindestens eine Element (6) in axialer Richtung des mindestens einen Elements (6) realisiert ist.

5. Halterung nach einem der Ansprüche 1 bis 4,
bei der die Dämpfungseinrichtung (1.2) eine Schaumstoffpolsterung, einen Gummi und/oder eine Feder aufweist.

6. Halterung nach einem der Ansprüche 1 bis 5,
bei der das erste Halterbauteil (1a) und das zweite Halterbauteil (1b) als zwei identische Halterhälften realisiert sind, mittels welchen das mindestens eine Element (6) vollumfänglich umschließbar ist.

7. Halterung nach einem der Ansprüche 1 bis 6,
wobei in dem ersten Halterbauteil (1a) und in dem zweiten Halterbauteil (1b) jeweils eine Mehrzahl von Aussparungen vorgesehen sind, mit denen eine Mehrzahl von Elementen (6) aufnehmbar sind.

8. Halterung nach einem der Ansprüche 1 bis 7,
wobei das erste Halterbauteil (1a) mit dem zweiten Halterbauteil (1b) verschraubbar ist.

9. Halterung nach einem der Ansprüche 1 bis 8,
ferner aufweisend ein Anschlussbauteil (4), wobei das erste Halterbauteil (1a) mit dem zweiten Halterbauteil (1b) und mit dem Anschlussbauteil (4) verschraubbar ist.

10. Halterung nach Anspruch 8 oder 9,
mit einer Ankermutter (3) und mit einer Schraube (2), die durch Bohrungen (1.1) in dem ersten Halterbauteil (1a) und in dem zweiten Halterbauteil (1b) hindurchführbar sind und zum Befestigen des ersten Halterbauteils (1a) mit dem zweiten Halterbauteil (1b) verschraubbar sind.

11. Halterung nach Anspruch 10,
wobei die Ankermutter (3) und die Bohrungen (1.1) derart aufeinander angepasst sind, dass ein selbsttätiges Lösen des ersten Halterbauteils (1a) von dem zweiten Halterbauteil (1b) vermieden ist.

12. Halterung nach Anspruch 10 oder 11,
wobei in dem Anschlussteil (4) ein Langloch (7) vorgesehen ist, dessen Form auf die Form der Ankermutter (3) derart angepasst ist, dass eine beidseitige Montierbarkeit auf dem Anschlussbauteil (4) ermöglicht ist und/oder dass eine Verschiebbarkeit des ersten Halterbauteils (1a) und des zweiten Halterbauteils (1b) quer zu einer Erstreckungsrichtung des mindestens einen Elements (6) ermöglicht ist.

13. Halterung nach einem der Ansprüche 1 bis 12,
mit einem Schnellverschluss (5) zum Verbinden des ersten Halterbauteils (1a) mit dem zweiten Halterbauteil (1b), so dass ein Aufklaffen des ersten Halterbauteils (1a) und des zweiten Halterbauteils (1b) vermieden ist.

14. Halterung nach Anspruch 13,
bei welcher der Schnellverschluss (5) ein Klickverschluss ist.

15. Halterung nach Anspruch 13 oder 14,
bei welcher der Schnellverschluss (5) mit dem ersten Halterbauteil (1a) und dem zweiten Halterbauteil (1b) integriert ist.

16. Halterung nach Anspruch 13 oder 14,
bei dem der Schnellverschluss (5) als von dem ersten Halterbauteil (1a) und dem zweiten Halterbauteil (1b) separates Bauelement vorgesehen ist.

17. Halterung nach einem der Ansprüche 1 bis 16,
bei der die Dämpfungseinrichtung (1.2) simultan als Führungseinrichtung zum Führen des mindestens einen Elements (6) eingerichtet ist.

18. Flugzeug,
mit einer Halterung nach einem der Ansprüche 1 bis 17.

19. Verfahren zur Führung und Befestigung von mindestens einem Element (6),
wobei bei dem Verfahren
das mindestens eine Element (6) von Aussparungen in einem ersten Halterbauteil (1a) und in einem zweiten Halterbauteil (1b) aufgenommen wird;
das erste Halterbauteil (1a) und das zweite Halterbauteil (1b) zusammengesetzt werden;
eine Dämpfungseinrichtung (1.2) in den Aussparungen derart vorgesehen wird, dass nach dem Zusammensetzen von erstem Halterbauteil (1a) und zweitem Halterbauteil (1b) das mindestens eine Element (6) im Wesentlichen vollumfänglich von der Dämpfungseinrichtung (1.2) umgeben ist, und wobei die Dämpfungseinrichtung (1.2) integriert mit dem ersten Halterbauteil (1a) und dem zweiten Halterbauteil (1b) vorgesehen wird.

20. Verwendung einer Halterung nach einem der Ansprüche 1 bis 17 in einem Flugzeug.
